# FASCICULE DE BREVET EUROPEEN

(11) **EP 1 927 453 B1**
(45) Date de publication et mention de la délivrance du brevet: **11.01.2012**
(21) Numéro de dépôt: 07119766.9
(22) Date de dépôt: 31.10.2007
(51) Int. Cl.: B29C 45/14, B62D 25/10, B60J 5/10

(54) **Procédé de fabrication d'une doublure intérieure de hayon en matière plastique renforcée et doublure intérieure de hayon**
Verfahren zur Herstellung einer Innenverkleidung für eine Heckklappe unter Verwendung eines verstärkten Kunststoffmaterials und Innenverkleidung für eine Heckklappe
Method for manufacturing an inner lining of a tailgate using a strengthened plastic material and inner lining of a tailgate

(30) Priorité: 03.11.2006 FR 0609631
(43) Date de publication de la demande: 04.06.2008
(73) Titulaire: COMPAGNIE PLASTIC OMNIUM, 69007 Lyon (FR)
(72) Inventeur: Amorin, Guilherme, 01150 Chazey sur Ain (FR); Rajon, Alexis, 69004 Lyon (FR); Fillon, Jérôme, 01150 Sainte Julie (FR); Cheron, Hugues, 01800 Meximieux (FR)
(74) Mandataire: Remy, Vincent Noel Paul

(56) Documents cités:
- DE-A1- 10 143 564
- DE-A1- 10 320 331
- DE-A1- 10 392 573
- DE-A1-102004 058 058
- FR-A1- 2 768 085
- JP-A- 2005 239 062
- ADER S ET AL: "AUTOMOTIVE MODULAR DEVELOPMENTS ENGINEERS FROM PLASTIC OMNIUM AUTO EXTERIEUR AND INOPLASTIC OMNIUM DISCUSS DESIGN CONSIDERATIONS FOR FRONT-END MODULE AND PLASTIC TAILGATE CONCEPTS" AUTOMOTIVE ENGINEERING, SOCIETY OF AUTOMOTIVE ENGINEERS. WARRENDALE, US, vol. 109, no. 7, juillet 2001 (2001-07), pages 79-85, XP001068059 ISSN: 0098-2571

## Description

La présente invention concerne un procédé de fabrication d'une doublure intérieure de hayon de véhicule automobile en matière thermoplastique renforcée.

On connaît dans l'état de la technique, notamment des publications DE 101 43 564, DE 10 2004 058 058 et DE 103 20 331, une pièce d'un ouvrant de véhicule réalisée en matière plastique et comprenant un élément surmoulé modifiant les propriétés mécaniques de la pièce. On connaîtaussi un hayon réalisé en matière thermoplastique comprenant une peau extérieure d'aspect et une doublure intérieure de structure réalisée en matière thermoplastique chargée. La matière thermoplastique constituant la doublure est par exemple chargée de fibres de verre ou de talc pour accroître ses propriétés de résistance.

En outre, la doublure intérieure est renforcée par des éléments de renforcement de type inserts en tôle, rapportés sur la doublure après son moulage. Ces inserts sont par exemple vissés, encliquetés ou rivetés.

La fabrication de la doublure intérieure en matière thermoplastique comprend une étape de moulage et une étape de refroidissement de la doublure moulée. Lors de l'étape de refroidissement, la présence de charges dans la matière thermoplastique, telles que des fibres de verre, a tendance à générer un gauchissement du hayon, c'est-à-dire une déformation lors du retrait. Ce gauchissement provient de l'anisotropie de la matière thermoplastique créée par les fibres de verre ou les particules de talc qui sont généralement de forme oblongue.

Ce gauchissement est d'autant plus important et visible que le hayon est une pièce de grandes dimensions. Or, la doublure étant une pièce visible depuis l'intérieur du véhicule, et dont la géométrie doit être sans défaut pour permettre au hayon de se fermer sans jeu, il est nécessaire de traiter ce gauchissement. Lors de la conception de pièces invisibles depuis l'extérieur du véhicule, comme par exemple une traverse de face avant technique, le gauchissement n'est pas pris en compte.

Une solution connue pour fabriquer un hayon consiste anticiper le gauchissement en utilisant un dispositif de conformation qui maintient la doublure au cours de son refroidissement dans une géométrie différente de la géométrie finale désirée.

Ce procédé de fabrication d'une doublure est long et complexe du fait du nombre important d'opérations à mettre en oeuvre après le moulage de la matière plastique chargée.

L'invention a pour but de proposer un procédé de fabrication d'une doublure intérieure de hayon renforcée au moins par un élément de renforcement qui ne présente pas les inconvénients des procédés connus.

A cet effet, l'invention a pour objet un procédé de fabrication d'une doublure intérieure de hayon de véhicule automobile conforme à la revendication 1.

On entend par matière thermoplastique chargée une matière thermoplastique contenant des charges minérales, telles que du talc, et/ou contenant des fibres de renfort, telles que des fibres de carbone, de verre, etc.

Grâce à l'invention, le procédé de fabrication de la doublure est particulièrement simple puisqu'il ne requiert pas l'utilisation d'un dispositif de conformation comme c'est le cas dans l'état de la technique. En effet, lors du refroidissement de la matière plastique de la doublure intérieure, l'élément de renforcement maintient la géométrie de la doublure qui ne subit alors aucun gauchissement.

L'élément de renforcement a donc, en plus de sa fonction de renfort et de rigidification qui est connue, une nouvelle fonction d'anti-gauchissement.

Un procédé de fabrication selon l'invention peut en outre comprendre l'une ou plusieurs des caractéristiques suivantes.
- La matière thermoplastique est chargée de fibres de verre ou de talc.
- L'élément de renforcement comprend un insert réalisé en métal ou en thermodurcissable tel que du SMC.
- On surmoule l'élément de renforcement de sorte qu'il soit localisé en une zone de concentration d'efforts de la doublure intérieure.
- La zone de concentration d'efforts est choisie parmi l'un quelconque des éléments de l'ensemble constitué par une zone supérieure du hayon de fixation d'une charnière, une zone latérale du hayon de reprise d'efforts de vérins, et une zone latérale inférieure du hayon sujette à torsion.

L'insert de liaison peut être un insert de plus faible dimension, de section différente et de plus faible masse que les deux éléments de renforcement. Cet insert de liaison permet de rigidifier un peu plus la doublure intérieure en transmettant les efforts subis par la doublure d'un élément de renforcement à un autre.
L'insert de liaison peut être une lame métallique emboutie ayant sensiblement la forme du hayon. De préférence, la section de l'insert métallique est conformée pour améliorer sa rigidité. Par exemple, la section de l'insert à sensiblement une forme de Oméga (Ω), ou a des bords pliés/tombés.
Cet insert de liaison peut être soudé aux éléments de renforcement. En particulier, l'ensemble des éléments de renforcement et des inserts de liaison peut être prémonté puis inséré dans le moule en une seule opération avant l'étape de surmoulage. Ainsi, les éléments de renforcement sont maintenus en position par les inserts de liaison lors du surmoulage.

L'insert de liaison peut également comprendre des moyens de fixation d'éléments fonctionnels tels qu'une butée de hayon, un élément de serrure notamment une gâche, un moteur d'essuie-glace, un dispositif d'éclairage de plaque de police, une poignée, un câblage ... A cet effet, l'insert de liaison comprend par exemple un pas de vis.

L'insert de liaison peut être venu de matière avec la doublure. Pour permettre de solidariser l'insert de liaison aux éléments de renforcement, on peut prévoir des orifices dans les éléments de renforcement, qui seront traversés par la matière thermoplastique de l'insert lors du surmoulage.
- Lors du surmoulage de l'élément de renforcement, au moins une partie de celui-ci, destinée à faire face à l'intérieur du véhicule, n'est pas recouverte de matière thermoplastique.
- Le procédé comprend une étape préalable d'enduction d'une partie de l'élément de renforcement d'une colle activable à chaud, la partie de l'élément de renforcement étant destinée à ne pas être recouverte par de la matière plastique lors du surmoulage. Ainsi, la colle est activée lors du surmoulage de l'élément de renforcement du fait de la chaleur régnant à l'intérieur du moule. Cela permet de venir rapporter par collage un élément sur la doublure intérieure moulée, dès sa sortie du moule. Ainsi, on s'affranchit d'une étape supplémentaire de chauffage de la doublure de hayon pour réactiver la colle.
- L'élément de renforcement est agencé pour constituer une piste de collage d'une lunette de hayon. Ainsi, si cette piste de collage est pré-enduite de colle activable à chaud, on peut assembler la lunette sur la doublure intérieure de hayon dès sa sortie du moule. Dans l'état de la technique, il est nécessaire d'attendre le refroidissement total de la doublure de hayon avant de pouvoir assembler la lunette, du fait des modifications géométriques qu'elle subit. Grâce à l'invention, il n'est pas nécessaire d'attendre le refroidissement de la doublure.

L'invention a également pour objet une doublure intérieure de hayon de véhicule automobile conforme à la revendication 9.

L'invention sera mieux comprise à la lecture de la description qui va suivre, faite uniquement en se référant aux figures annexées dans lesquelles :
- la figure 1 est une vue en perspective d'un hayon,

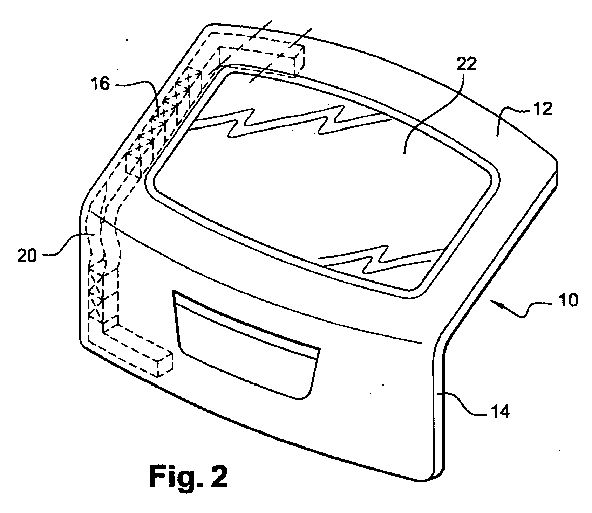

- La figure 2 est une vue similaire à la figure 1 d'un hayon selon l'invention,
- la figure 3 est un schéma selon une coupe transversale d'un montant latéral du hayon représenté sur les figures 1 et 2.

Les références utilisées sur les schémas sont regroupées dans le tableau suivant.

| Eléments décrits | Références |
|---|---|
| Hayon | 10 |
| Peau extérieure d'aspect | 12 |
| Doublure intérieure | 14 |
| Elément de renforcement | 16 |
| Nervures | 18 |
| Insert de liaison | 20 |
| Lunette | 22 |
| Zone charnière | 24 |
| Zone vérin | 26 |
| Zone latérale inférieure | 28 |
| Piste de collage | 30 |
| Colle | 32 |

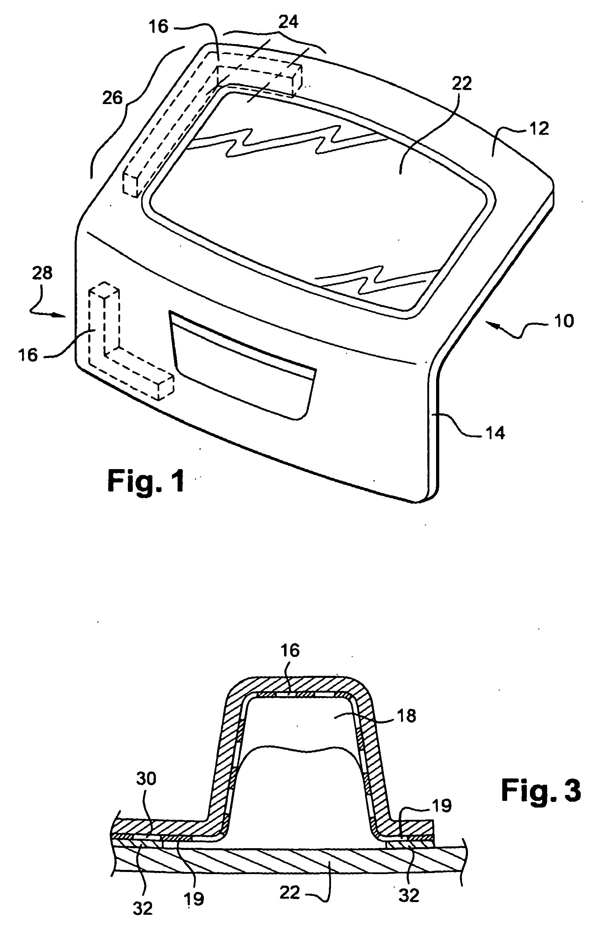

Comme représenté sur la figure 3, l'élément de renforcement 16 présente en section une forme de U prolongée par deux rebords 19 coplanaires. Sur le hayon monté sur le véhicule, la face "en relief" de l'élément de renforcement est dirigée vers l'intérieur du véhicule et sa face "en creux" est orientée vers l'extérieur du véhicule. Un élément 16 est surmoulé par de la matière plastique formant la doublure intérieure 14 sur sa face en relief. Sur sa face en creux, l'élément de renforcement 16 comporte une nervure 18 obtenue par surmoulage avec la même matière plastique.

Sur cette face en creux, la matière plastique constituant la nervure 18 est surmoulée de sorte que les rebords 19 de l'élément de renforcement 16 ne soient pas recouverts de matière plastique. Ces rebords 19 de l'élément de renforcement 16 constituent une piste de collage 30 de la lunette 22. A cet effet, la piste de collage 30 est enduite de colle 32.

Dans une variante avantageuse, la colle 32 est une colle réactivable à chaud qui est pré-enduite sur l'élément de renforcement. Ainsi, le surmoulage avec la matière plastique provoque la réactivation de la colle et la lunette 22 peut-être appliquée contre la piste de collage 30 dès que la doublure intérieure 14 du hayon sort du moule de surmoulage.

La peau 12 peut ou non encadrer la lunette 22.

Dans l'exemple représenté, l'insert est réalisé en tôle mais il peut être réalisé en d'autres matériaux suffisamment résistants pour assurer une fonction de renforcement. Par exemple, on peut également utiliser un élément de renforcement en matière thermodurcissable.

Les éléments de renforcement sont agencés sur la doublure 14 en des zones de concentration d'efforts et de manière à limiter le gauchissement.

Les zones de concentration d'efforts comprennent notamment :
● une zone supérieure 24 de fixation de charnières (non-représentées),
● une zone latérale 26 de reprise d'efforts de vérins (non-représentés),
● une zone latérale inférieure 28, identifiée par les inventeurs comme une zone de torsion importante.

L'insert de liaison 20 est un insert de petites dimensions, moins résistant que les éléments de renforcement, mais qui permet de transmettre les efforts entre éléments de renforcement.

## Revendications

1. Procédé de fabrication d'une doublure intérieure (14) de hayon (10) de vehicule automobile, réalisée en matière thermoplastique chargée et renforcée par au moins un élément de renforcement (16), **caractérisé en ce qu'**il consiste à surmouler au moins deux éléments de renforcement (16) et un insert de liaison (20) reliant les deux éléments de renforcement par de la matière thermoplastique, les éléments de renforcement (16) étant agencés pour limiter le gauchissement de la doublure (14).

2. Procédé selon la revendication précédente, dans lequel la matière thermoplastique est chargée de fibres de verre ou de talc.

3. Procédé selon l'une quelconque des revendications précédentes, dans lequel l'élément de renforcement (16) comprend un insert réalisé en métal ou en thermodurcissable tel que du SMC.

4. Procédé selon l'une quelconque des revendications précédentes, dans lequel on surmoule l'élément de renforcement (16) de sorte qu'il soit localisé en une zone de concentration d'efforts (24, 26, 28) de la doublure intérieure (14).

5. Procédé selon la revendication précédente, dans lequel la zone de concentration d'efforts (24, 26, 28) est choisie parmi l'un quelconque des éléments de l'ensemble constitué par une zone supérieure (24) du hayon de fixation d'une chamière, une zone latérale (26) du hayon de reprise d'efforts de vérins, et une zone latérale inférieure du hayon sujette à torsion.

6. Procédé selon l'une quelconque des revendications précédentes, dans lequel, lors du surmoulage de l'élément de renforcement, au moins une partie de celui-ci, destinée à faire face à l'intérieur du véhicule, n'est pas recouverte de matière plastique.

7. Procédé selon la revendication précédente, comprenant une étape préalable d'enduction d'une partie de l'élément de renforcement d'une colle activable à chaud, la partie de l'élément de renforcement étant destinée à ne pas être recouverte par de la matière plastique lors du surmoulage.

8. Procédé selon la revendication précédente, dans lequel l'élément de renforcement est agencé pour constituer une piste de collage d'une lunette de hayon.

9. Doublure intérieure (14) de hayon (10) de véhicule automobile, réalisée par moulage de matière thermoplastique chargée et comprenant au moins un élément de renforcement (16), **caractérisé en ce qu'**elle comprend deux éléments et un insert de liaison (20) reliant les deux éléments de renforcement, dans lequel les éléments de renforcement (16) et l'insert de liaison sont au moins partiellement noyés dans la matière thermoplastique, les éléments de renforcement étant agencés pour limiter le gauchissement de la doublure (14).

## Claims

1. Method for manufacturing an inner lining (14) of a motor vehicle tailgate (10), made from loaded thermoplastic material and strengthened by at least one reinforcement element (16), **characterised in that** it consists in overmoulding at least two reinforcement elements (16) and a connection insert (20) connecting the two reinforcement elements by thermoplastic material, the reinforcement elements (16) being designed to limit the warping of the lining (14).

2. Method according to the preceding claim, wherein the thermoplastic material is loaded with glass fibres or talc powder.

3. Method according to any of the preceding claims, wherein the reinforcement element (16) comprises an insert made of metal or thermosetting plastic such as SMC.

4. Method according to any of the preceding claims, wherein the reinforcement element (16) is overmoulded such that it is located in a stress concentration area (24, 26, 28) of the inner lining (14).

5. Method according to the preceding claim, wherein the stress concentration area (24, 26, 28) is chosen from any element of the set consisting of an upper area (24) of the tailgate where the hinge is attached, a lateral area (26) of the tailgate where the forces of the cylinders are taken up and a lower lateral area of the tailgate subject to torsion.

6. Method according to any of the preceding claims, wherein, when the reinforcement element is being overmoulded, at least part of it, intended to face the inside of the vehicle, is not covered with plastic.

7. Method according to the preceding claim, comprising a prior step for coating part of the reinforcement element with a heat activated glue, the part of the reinforcement element not being designed to be covered by plastic during the overmoulding.

8. Method according to the preceding claim, wherein the reinforcement element is designed to form a bonding track for a tailgate window.

9. Inner lining (14) of a motor vehicle tailgate (10), made by moulding loaded thermoplastic material and comprising at least one reinforcement element (16), **characterised in that** it comprises two elements and a connection insert (20) connecting the two reinforcement elements, wherein the reinforcement elements (16) and the connecting insert are at least partially embedded in thermoplastic material, the reinforcement elements being designed to limit the warping of the lining (14).

## Patentansprüche

1. Verfahren zur Herstellung einer Innenverkleidung (14) für eine Heckklappe (10) eines Kraftfahrzeugs, die aus einem Thermoplast, der gefüllt und mit mindestens einem Verstärkungselement (16) verstärkt ist, hergestellt ist, **dadurch gekennzeichnet, dass** es darin besteht, mindestens zwei Verstärkungselemente (16) und einen Verbindungseinsatz (20), der die zwei Verstärkungselemente durch Thermoplast verbindet, abzuformen, wobei die Verstärkungselemente (16) eingerichtet sind, um das Verziehen der Verkleidung (14) einzuschränken.

2. Verfahren nach dem vorhergehenden Anspruch, bei dem der Thermoplast mit Glasfasern oder Talk gefüllt ist.

3. Verfahren nach einem der vorhergehenden Ansprüche, bei dem das Verstärkungselement (16) einen Einsatz aufweist, der aus Metall oder aus Duroplast, wie zum Beispiel SMC, hergestellt ist.

4. Verfahren nach einem der vorhergehenden Ansprüche, bei dem man das Verstärkungselement (16) derart abformt, dass es sich in einem Kräftekonzentrationsbereich (24, 26, 28) der Innenverkleidung (14) befindet.

5. Verfahren nach dem vorhergehenden Anspruch, bei dem der Kräftekonzentrationsbereich (24, 26, 28) aus einem beliebigen der Elemente der Einheit ausgewählt wird, die aus einem oberen Bereich (24) der Heckklappe zum Befestigen eines Scharniers, einem seitlichen Bereich (26) der Heckklappe zur Übernahme von Kräften von Zylindern, und einem seitlichen unteren Bereich der Heckklappe, der Torsion unterliegt, besteht.

6. Verfahren nach einem der vorhergehenden Ansprüche, bei dem beim Abformen des Verstärkungselements mindestens ein Teil davon, der dazu bestimmt ist, dem Inneren des Fahrzeugs gegenüberzuliegen, nicht mit Kunststoff abgedeckt wird.

7. Verfahren nach dem vorhergehenden Anspruch, das einen vorausgehenden Schritt des Beschichtens eines Teils des Verstärkungselements mit einem wärmeaktivierbaren Klebstoff aufweist, wobei der Teil des Verstärkungselements dazu bestimmt ist, beim Abformen nicht von dem Kunststoff abgedeckt zu werden.

8. Verfahren nach dem vorhergehenden Anspruch, bei dem das Verstärkungselement eingerichtet ist, um eine Klebebahn einer Heckscheibe zu bilden.

9. Innenverkleidung (14) für Heckklappe (10) eines Kraftfahrzeugs, die durch Abformen eines gefüllten Thermoplast, der mindestens ein Verstärkungselement (16) aufweist, hergestellt ist, **dadurch gekennzeichnet, dass** sie zwei Elemente und einen Verbindungseinsatz (20), der die zwei Verstärkungselemente verbindet, aufweist, wobei die Verstärkungselemente (16) und der Verbindungseinsatz wenigstens teilweise in den Thermoplast eingelassen sind, wobei die Verstärkungselemente eingerichtet sind, um das Verziehen der Verkleidung (14) einzuschränken.
